(19) Europäisches Patentamt
European Patent Office
Office européen des brevets

(11) EP 2 881 022 B1

(12) # EUROPEAN PATENT SPECIFICATION

(45) Date of publication and mention of the grant of the patent:
**28.06.2017 Bulletin 2017/26**

(21) Application number: **13825654.0**

(22) Date of filing: **01.08.2013**

(51) Int Cl.:
***A47J 36/04*** *(2006.01)* ***A47J 36/02*** *(2006.01)*
***A47J 37/10*** *(2006.01)*

(86) International application number:
**PCT/JP2013/070876**

(87) International publication number:
**WO 2014/021420 (06.02.2014 Gazette 2014/06)**

(54) **COOKING UTENSIL**

KOCHUTENSIL

USTENSILE DE CUISSON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2012 JP 2012171383**

(43) Date of publication of application:
**10.06.2015 Bulletin 2015/24**

(73) Proprietor: **Daikin Industries, Ltd.**
**Osaka-shi, Osaka 530-8323 (JP)**

(72) Inventors:
- **MOMOSE Hiromichi**
**Osaka 530-8323 (JP)**
- **SODA Yoshihiro**
**Osaka 530-8323 (JP)**
- **KINOSHITA Takuya**
**Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**WO-A1-99/21927**
**WO-A1-03/011991**
**JP-A- H0 866 314**
**JP-A- H10 176 277**
**JP-A- 2000 334 887**
**JP-A- 2001 521 450**
**JP-U- 3 146 744**
**US-A- 4 123 401**
**US-A1- 2004 170 838**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 881 022 B1

## Description

TECHNICAL FIELD

The present invention relates to a cooking utensil. Specifically, the present invention relates to a cooking utensil which has a fluororesin layer.

BACKGROUND ART

Generally, cooking utensils such as frying pans, hot plates, pans, and inner pots of rice cookers have coating layers of fluororesins, which are excellent in such properties as heat resistance, anti-stick properties, and stain resistance, on metal substrates (e.g., aluminum substrate, stainless steel substrate). Such coating layers of fluororesins serve to prevent scorching or sticking of ingredients during cooking.

Some of such cooking utensils with a fluororesin coating layer contain various inorganic materials such as fillers as a material in the coating layer mainly for improvement of abrasion resistance.

Some examples of such cooking utensils has been reported. For example, Patent Literatures 1 and 2 disclose formation of a coating on the surface of a frying pan using a composition which may comprises, depending on the needs, fillers such as mica, mica coated with titanium oxide or iron oxide, or metal flakes in a fluororesin dispersion (e.g., a polytetrafluoroethylene (PTFE) dispersion) that contains a specific component.

CITATION LIST

- Patent Literature

Patent Literature 1: WO 99/021927
Patent Literature 2: WO 03/011991

SUMMARY OF INVENTION

- Technical Problem

Recent diversification of consumer needs has led to demand for cooking utensils excellent in aesthetic qualities such as color tone in addition to conventional required properties such as heat resistance, anti-stick properties, stain resistance, and abrasion resistance. Incorporation of mica into materials of the coating layer has been known to provide glittering appearance to cooking utensils. However, there is still room for improvement in aesthetic qualities.

In view of the above situation in the art, the present invention aims to provide a cooking utensil which is excellent in aesthetic qualities.

- Solution to Problem

The present inventors have developed a cooking utensil with a fluororesin layer containing a pigment. Here, the pigment comprises specific scaly particles that are coated with a metal oxide. The present inventors then found that such a cooking utensil exhibits a color changing effect when seen from different angles (hereinafter, also referred to as a color travel effect), whereby exhibits novel aesthetic qualities which are not present in conventional cooking utensils. The inventors also found that such a cooking utensil maintains sufficient color travel effect and excellent aesthetic qualities even after use under a high temperature environment, such as use in cooking. Such findings have led to the completion of the present invention.

Accordingly, the present invention relates to a cooking utensil comprising: a substrate; and a fluororesin layer, the fluororesin layer containing a perfluorinated fluororesin and a pigment that comprises scaly particles. The pigment is at least one selected from the group consisting of silica flakes coated with a metal oxide, glass flakes coated with a metal oxide, and mica coated with silicon oxide.

The metal oxide is preferably selected from the group consisting of titanium oxide, iron oxide, tin oxide, and silicon oxide.

The perfluorinated fluororesin preferably contains polytetrafluoroethylene.

The fluororesin layer may further contain mica.

Preferably, the cooking utensil of the present invention further contains a primer layer.

The cooking utensil of the present invention may further contain a clear layer.
The cooking utensil of the present invention is preferably a frying pan.

- Advantageous Effects of Invention

Having the above structure, the cooking utensil of the present invention has excellent aesthetic qualities and can maintain the excellent aesthetic qualities even after use under a high temperature environment, such as use in cooking. The cooking utensil of the present invention is particularly suitable for use as a cooking utensil for cooking, such as a frying pan.

DESCRIPTION OF EMBODIMENTS

The present invention is described in detail below.
The substrate constituting the cooking utensil of the present invention is not particularly limited. Examples thereof include metals such as elemental metals such as iron, aluminum, and copper and alloys thereof; and non-metal inorganic materials such as porcelain, glass, and ceramic. Examples of the alloys include stainless steel. The substrate is preferably a metal, and more preferably aluminum or stainless steel.
The substrate may optionally be subjected to a surface treatment such as degreasing or roughening. The way of roughening is not particularly limited. Examples thereof include chemical etching by an acid or an alkali, anodic oxidation (an alumite treatment), and sandblasting. The way of the surface treatment can be appropriately selected depending on the type of the substrate and the primer coating composition, considering whether the way of the surface treatment allows uniform application of a primer coating composition for forming the below-described primer layer without causing crawling and whether it achieves improved adhesion between the substrate and the primer film. Preferable way for the surface treatment is, for example, sandblasting.
The substrate may be degreased by baking at 380°C to thermally decompose and remove impurities such as oil. The substrate may be an aluminum substrate that is surface-treated and then roughened with an alumina abrasive.
The fluororesin layer constituting the cooking utensil of the present invention contains a perfluorinated fluororesin. This allows the cooking utensil to exhibit the properties that have been required of cooking utensils with a fluororesin coating layer, such as anti-stick properties, heat resistance, and sliding properties.
The perfluorinated fluororesin may be a polymer in which all of the hydrogen atoms bonded to carbon atoms are replaced with fluorine atoms. The perfluorinated fluororesin may be non-melt-processable or melt-processable.
The perfluorinated fluororesin is preferably obtainable by polymerizing fluorine-containing unsaturated monomers that have, in the molecule, a vinyl group all the hydrogen atoms of which are replaced with fluorine atoms. The perfluorinated fluororesin may be a homopolymer of one of the fluorine-containing unsaturated monomers or a copolymer of two or more of the fluorine-containing unsaturated monomers. The perfluorinated fluororesins may be used singly, or in combination of two or more thereof.
Examples of the homopolymer of one of the fluorine-containing unsaturated monomers and the copolymer of two or more thereof include tetrafluoroethylene [TFE] homopolymers [TFE homopolymers], modified polytetrafluoroethylene [modified PTFE], TFE/perfluoro(alkyl vinyl ether) [PAVE] copolymers [PFA], and TFE/hexafluoropropylene [HFP] copolymers [FEP]. The TFE homopolymers are non-melt-processable.
The "modified PTFE" means one obtained by copolymerising TFE with a comonomer in such a small amount as not to provide melt processability to the resulting copolymer. The comonomer in a small amount is not particularly limited. Examples of the comonomer include HFP, chlorotrifluoroethylene [CTFE], and PAVE. The proportion of the comonomer added to the modified PTFE varies depending on the types of the comonomer. For example, when PAVE is used, the proportion of the comonomer is generally preferably 0.001 to 1% by mass based on the total mass of the TFE and the comonomer.
The perfluorinated fluororesin preferably contains polytetrafluoroethylene [PTFE] (a TFE homopolymer and/or a modified PTFE) noted above.
The perfluorinated fluororesin also preferably contains PFA and/or FEP in combination with PTFE.
The perfluorinated fluororesin can be obtained by a conventionally known polymerization such as suspension polymerization or emulsion polymerization. In the polymerization, polymerization conditions such as temperature and pressure, and polymerization initiators or other additives can be appropriately selected depending on the composition or the amount of the desired polymer.
The perfluorinated fluororesin preferably has a number average molecular weight of $2 \times 10^4$ to $1 \times 10^7$, and particularly preferably $2 \times 10^5$ to $8 \times 10^6$. If the number average molecular weight is less than $2 \times 10^4$, coated film tends to be brittle. If the number average molecular weight exceeds $1 \times 10^7$, viscosity of the melt will become too high, and thus particles are less likely to be fused together.
The number average molecular weight of the PTFE may be determined in accordance with the method shown

in "Journal of Applied Polymer Science" vol. 17, pp. 3253-3257 (1973). The number average molecular weight of the FEP may be determined by: determining the melt flow rate (MFR) of the FEP in accordance with the method of ASTM D 2116; calculating the melt viscosity (MV) according to Formula (1) below; and calculating the number average molecular weight (Mn) according to Formula (2).

Formula (1):

$$MV = \frac{\pi \times \text{Working pressure}(kgf \cdot mm^2) \times \text{Orifice diameter (mm)}}{8 \times MFR \times \text{Orifice diameter (mm)}}$$

Formula (2):

$$Mn = \sqrt[3.4]{\frac{MV}{162 \times 10^{-13}}}$$

The perfluorinated fluororesin particles which may be used are, for example, a neat product of fine particles prepared by polymerization, such as emulsion polymerization, of a fluoromonomer (fine particles in an aqueous dispersion of a perfluorinated fluororesin). The fine particles preferably have an average particle size of 0.01 to 100 μm, and particularly preferably 0.1 to 5 μm. If the fine particles have an average particle size of smaller than 0.01 μm, film forming properties tend to be low, while if they have an average particle size of larger than 100 μm, the nozzle of a gun tends to be clogged on coating.

In the present invention, the aqueous dispersion of perfluorinated fluororesin particles obtained by emulsion polymerization or powdery particles obtained from this aqueous dispersion can be used. The aqueous dispersion is preferred because powder may have poor handleability due to electrical repulsion between the particles. The aqueous dispersion of the perfluorinated fluororesin preferably has a perfluorinated fluororesin solid content of 20 to 80% by mass and particularly preferably 40 to 70% by mass, from the viewpoint of good dispersion stability and good coating formation properties when coated. The solid content can be appropriately adjusted in the step of preparing an aqueous dispersion composition of the perfluorinated fluororesin.

The fluororesin layer constituting the cooking utensil of the present invention also contains a pigment that comprises specific scaly particles coated with a metal oxide (hereinafter, also referred to as a metal oxide-coated scaly pigment). The metal oxide-coated scaly pigment gives the color travel effect, that is, an effect that the color tone of the fluororesin layer is changed when it is seen from different angles. As a result, the cooking utensil of the present invention has excellent aesthetic qualities which is not present in prior art cooking utensils. The metal oxide-coated scaly pigment also serves as a filler and thus further exhibits an effect of improving abrasion resistance of the fluororesin layer.

The scaly particles constituting the metal oxide-coated scaly pigment, that is, the scaly particles which are substrates to be coated with a metal oxide, are at least one selected from the group consisting of silica flakes, glass flakes, and mica. These scaly particles will provide excellent color travel effect.

Herein, the scaly particles mean particles having an aspect ratio (average particle size/average thickness) of 5 or greater. The aspect ratio can be calculated from the average particle size and the average thickness measured with a scanning electron microscope (SEM). The average aspect ratio of 30 samples is employed.

The metal oxide-coated scaly pigment preferably has an aspect ratio of 5 to 750, and more preferably 20 to 200. A more preferred lower limit thereof is 30, and a more preferred upper limit is 100. The aspect ratio of the metal oxide-coated scaly pigment can be measured by the method described above.

The metal oxide is not particularly limited as long as it is an oxide of a metal. Examples of the metal oxide include titanium oxide ($TiO_2$ (titanium dioxide)), iron oxide ($Fe_2O_3$ (diiron trioxide)), tin oxide ($SnO_2$ (tin dioxide)), and silicon oxide ($SiO_2$ (silicon dioxide)). These may be used singly or in combination of two or more thereof. For excellent color travel effect, the metal oxide is preferably at least one selected from the group consisting of titanium oxide ($TiO_2$ (titanium dioxide)) and iron oxide ($Fe_2O_3$ (diiron trioxide)). If the scaly particles are mica, combined use of titanium oxide and silicon oxide as the metal oxides is particularly preferred.

The metal oxide-coated scaly pigment is preferably at least one selected from the group consisting of silica flakes coated with a metal oxide, glass flakes coated with a metal oxide, and mica coated with silicon oxide (silicon

oxide-coated mica), and more preferably at least one selected from the group consisting of silica flakes coated with titanium oxide, silica flakes coated with iron oxide, glass flakes coated with titanium oxide, and mica coated with titanium oxide/silicon oxide, and still more preferably at least one selected from the group consisting of silica flakes coated with titanium oxide, silica flakes coated with iron oxide, and glass flakes coated with titanium oxide. It is preferred from the viewpoint of aesthetic qualities that the fluororesin layer does not contain mica that is not coated with silicon oxide.

The metal oxide-coated scaly pigment preferably has an average particle size of 1 to 200 μm. The lower limit thereof is more preferably 3 μm, still more preferably 5 μm, and particularly preferably 10 μm. The upper limit thereof is more preferably 60 μm, still more preferably 50 μm, and particularly preferably 40 μm. The average particle size herein may be calculated from the particle size distribution measured with a laser diffraction particle size distribution analyzer (Microtrac MT3300II available from Nikkiso Co., Ltd., medium: pure water, temperature: room temperature).

The metal oxide-coated scaly pigment preferably contains the metal oxide in an amount of 5 to 70% by mass based on the total amount of the metal oxide and the scaly particles which are substrates to be coated with the metal oxide. The lower limit thereof is more preferably 10% by mass, and still more preferably 14% by mass. The upper limit thereof is more preferably 67% by mass, and still more preferably 43% by mass.

The fluororesin layer preferably contains the metal oxide-coated scaly pigment in an amount of 0.1 to 20.0% by mass based on the perfluorinated fluororesin. The lower limit thereof is more preferably 0.5% by mass, and still more preferably 2.0% by mass. The upper limit thereof is more preferably 10.0% by mass, and still more preferably 8.0% by mass.

The metal oxide-coated scaly pigment can be produced by a conventionally known method.

The fluororesin layer in the present invention may further contains additives in addition to the perfluorinated fluororesin and the metal oxide-coated scaly pigment. Examples of the additives include fluorine-free resins; pigments other than the metal oxide-coated scaly pigment (hereinafter, also referred to as other pigments); and fillers such as conductive fillers, diamond, gold, silver, copper, and platinum. These may be used singly or in combination of two or more thereof.

Examples of the fluorine-free resins include polyamideimide resins, polyimide resins, polyethersulfone resins, polyetherimide resins, polyetheretherketone resins, aromatic polyester resins, and polyarylenesulfide resins.

Examples of other pigments include mica (which is not coated with a metal oxide), metal oxide-coated mica, carbon black, titanium oxide, and synthetic iron oxide. Preferred among these are mica and metal oxide-coated mica.

The amount of the additives is preferably 0.1 to 20.0% by mass based on the perfluorinated fluororesin.

The fluororesin layer preferably has a thickness of 5 to 70 μm. If the fluororesin layer is too thin, abrasion resistance or corrosion resistance of the cooking utensil may be poor. If the fluororesin layer is too thick, corrosion resistance of the cooking utensil may be poor owing to, when the cooking utensil is used in the presence of moisture vapor, the moisture vapor remained in the cooking utensil. The lower limit of the thickness of the fluororesin layer is more preferably 10 μm, and still more preferably 15 μm. The upper limit thereof is more preferably 60 μm, and still more preferably 50 μm.

The cooking utensil may have a single layer or two or more layers of the fluororesin layer(s).

The cooking utensil preferably further has a primer layer. The primer layer is not limited as long as it adheres well to the substrate. The primer layer preferably contains a fluorine-containing polymer (a) and a heat resistant resin.

The fluorine-containing polymer (a) means a polymer having fluorine atoms which are directly bonded to carbon atoms of the main chain or the side chain. The fluorine-containing polymer (a) may be non-melt-processable or melt-processable.

The fluorine-containing polymer (a) is preferably obtainable by polymerizing a fluorine-containing monoethylene-type unsaturated hydrocarbon (I).

The fluorine-containing monoethylene-type unsaturated hydrocarbon (I) (hereinafter, also referred to as an "unsaturated hydrocarbon (I)") refers to unsaturated hydrocarbons having, in the molecule, one vinyl group in which part or all of the hydrogen atoms are replaced with fluorine atoms.

In the unsaturated hydrocarbon (I), part or all of the hydrogen atoms that are not replaced with fluorine atoms may be replaced with another or other halogen atom(s) than a fluorine atom (e.g., a chlorine atom) and/or with fluoroalkyl groups such as a trifluoromethyl group. Note that the unsaturated hydrocarbon (I) is not trifluoroethylene, which will be described later.

The unsaturated hydrocarbon (I) is not particularly limited, and examples thereof include tetrafluoroethylene [TFE], hexafluoropropylene [HFP], chlorotrifluoroethylene [CTFE], vinylidene fluoride [VdF], and vinyl fluoride [VF]. These may be used singly or in combination of two or more thereof.

The fluorine-containing polymer (a) may be a homopolymer of the unsaturated hydrocarbons (I). Examples of the homopolymer of the unsaturated hydrocarbons (I) include tetrafluoroethylene homopolymers [TFE homopolymers], polychlorotrifluoroethylene [PCTFE], polyvinylidene fluoride [PVdF], and polyvinyl fluoride [PVF].

The fluorine-containing polymer (a) may be a copolymer of at least one of the unsaturated hydrocarbons (I) with an unsaturated compound (II) which is copolymerizable with the unsaturated hydrocarbon (I).

In the present invention, polymers obtainable by polymerizing one of, or two or more of only the unsaturated hydrocarbons (I) can be used as the fluorine-containing polymer (a). On the contrary, polymers obtained by polymerizing one of, or two or more of only the unsaturated compounds (II) cannot be used as the fluorine-containing polymer (a). The unsaturated compound (II) is different in this regard from the unsaturated hydrocarbon (I).

The unsaturated compound (II) is not particularly limited. Examples thereof include: trifluoroethylene [3FH]; and monoethylene-type unsaturated hydrocarbons such as ethylene [Et] and propylene [Pr]. These may be used singly or in combination of two or more thereof.

The fluorine-containing polymer (a) may be a copolymer of two or more species of the unsaturated hydrocarbons (I). The copolymer of two or more species of the unsaturated hydrocarbons (I), and the copolymer of at least one of the unsaturated hydrocarbons (I) with the unsaturated compound (II) are each not particularly limited, and may be a bipolymer or a terpolymer, for example.

The bipolymer is not particularly limited, and examples thereof include VdF/HFP copolymers, Et/CTFE copolymers [ECTFE], and Et/HFP copolymers.

The bipolymer may be a TFE-based copolymer such as TFE/HFP copolymers [FEP], TFE/CTFE copolymers, TFE/VdF copolymers, TFE/3FH copolymers, Et/TFE copolymers [ETFE], and TFE/Pr copolymers. The "TFE-based copolymer" herein refers to copolymers obtainable by copolymerizing TFE and one, two or more monomers other than TFE. The proportion of the monomers other than TFE added to the TFE-based copolymer is generally preferably more than 1% by mass based on the total amount of the TFE and the monomers other than TFE.

Examples of the terpolymer include VdF/TFE/HFP copolymers.

Examples of the monomers other than TFE, which costitutes the TFE-based copolymer, include the following monomer (III) which is copolymerizable with TFE. The monomer (III) is preferably at least one monomer selected from the group consisting of compounds (excluding HFP) represented by the following formula:

$$X(CF_2)_mO_nCF=CF_2$$

wherein X represents -H, -Cl, or -F; m represents an integer of 1 to 6, and n represents an integer of 0 or 1; compounds represented by the following formula:

$$C_3F_7O[CF(CF_3)CF_2O]p\text{-}CF=CF_2$$

wherein p is an integer of 1 or 2; and compounds represented by the following formula:

$$X(CF_2)_qCY=CH_2$$

wherein X is the same as defined above; Y represents -H or -F; and q represents an integer of 1 to 6. These may be used singly or in combination of two or more thereof. Examples of such a TFE-based copolymer include TFE/perfluoro(alkyl vinyl ether) [PAVE] copolymers [PFA].

The fluorine-containing polymer (a) may be modified polytetrafluoroethylene [modified PTFE]. The "modified PTFE" means one obtained by copolymerising TFE with a comonomer in such a small amount as not to provide melt processability to the resulting copolymer. The comonomer in a small amount is not particularly limited, and examples thereof include HFP and CTFE among the unsaturated hydrocarbons (I); 3FH among the unsaturated compounds (II); and PAVE, perfluoro(alkoxy vinyl ether), and (perfluoroalkyl)ethylene among the monomer (III). These may be used singly or in combination of two or more thereof.

The proportion of the comonomer in a small amount to the modified PTFE varies depending on the types of the comonomer. For example, if PAVE, perfluoro(alkoxy vinyl ether), or the like is used, the proportion of the comonomer is generally preferably 0.001 to 1% by mass based on the total mass of the TFE and the small amount of comonomer.

The fluorine-containing polymers (a) may comprise one, two or more species. The fluorine-containing polymer (a) may be a mixture of any one of the homopolymers of the unsaturated hydrocarbons (I) and one, two or more of the copolymers of the unsaturated hydrocarbons (I). Alternatively, the fluorine-containing polymer may be a mixture of two or more of the copolymers of the unsaturated hydrocarbons (I).

Examples of the above mixtures include mixtures of TFE homopolymers and the TFE-based copolymers and mixtures of two or more of the TFE-based copolymers. Examples of such mixtures include a mixture of a TFE homopolymer and PFA, a mixture of a TFE homopolymer and FEP, a mixture of a TFE homopolymer, PFA, and FEP, and a mixture of PFA and FEP.

The fluorine-containing polymer (a) may be obtained by polymerizing a perfluoroalkyl group-containing ethylenically unsaturated monomer (IV) (hereinafter, also referred to as an "unsaturated monomer (IV)"). The unsaturated monomer (IV) is represented by any of the formula:

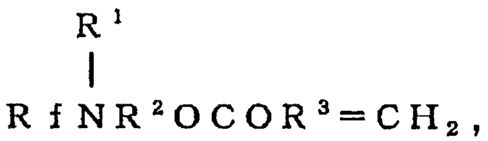

$Rf(CH_2)_rOCOCR^3=CH_2$,

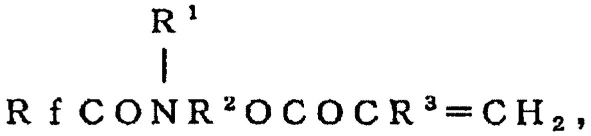

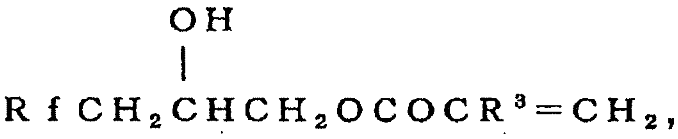

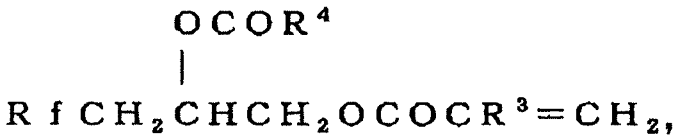

$Rf(CH_2)_sCOOCH=CH_2$,

$RfCH=CH(CH_2)_rOCOCR^3=CH_2$

wherein Rf represents a C4 to C20 perfluoroalkyl group; $R^1$ represents -H or a C1 to C10 alkyl group; $R^2$ represents a C1 to C10 alkylene group; $R^3$ represents -H or a methyl group; $R^4$ represents a C1 to C17 alkyl group; r represents an integer of 1 to 10; and s represents an integer of 0 to 10.

The fluorine-containing polymer (a) may be a homopolymer of the unsaturated monomer (IV) or may be a copolymer of the unsaturated monomer (IV) and a monomer (V) which is copolymerizable with the unsaturated monomer (IV).

The monomer (V) is not particularly limited. Examples thereof include: (meth)acrylic acid derivatives such as cyclohexyl (meth)acrylate, (meth)acrylic acid benzyl ester, polyethyleneglycol di(meth)acrylate, N-methylolpropaneacryamide, (meth)acrylic acid amide, and (meth)acrylic acid alkyl esters having a C1 to C20 alkyl group; substituted or non-substituted ethylenes such as ethylene, vinyl chloride, vinyl fluoride, styrene, $\alpha$-methylstyrene, and p-methylstyrene; vinyl ethers such as alkyl vinyl ethers having a C1 to C20 alkyl group and halogenated alkyl vinyl ether having a C1 to C20 alkyl group; vinyl ketones such as vinyl alkyl ketones having a C1 to C20 alkyl group; aliphatic unsaturated polycarboxylic acid and derivatives thereof such as maleic acid anhydride; and polyenes such as butadiene, isoprene, and chloroprene.

The fluorine-containing polymer (a) can be obtained by emulsion polymerization or the like conventionally known polymerization method.

It is preferred that the fluorine-containing polymer (a) is at least one polymer selected from the group consisting of TFE homopolymers, modified PTFE, and the TFE-based copolymers because these polymers allow the resulting cooking utensil to have excellent corrosion resistance. The TFE-based copolymer is preferably at least one copolymer selected from the group consisting of FEP and PFA.

Accordingly, the fluorine-containing polymer (a) is preferably at least one polymer selected from the group consisting of TFE homopolymers, modified PTFE, FEP, and PFA.

It is preferred that the fluorine-containing polymer (a) contains the TFE-based copolymer because it allows the resulting cooking utensil to have excellent adhesion between the primer layer and the fluororesin layer. Examples of the fluorine-containing polymer (a) containing the TFE-based copolymer include PFA alone, a mixture of a TFE homopolymer and FEP, a mixture of a TFE homopolymer and PFA, a mixture of a modified PTFE and FEP, and a mixture of a modified PTFE and PFA. The fluorine-containing polymer (a) in the primer layer is preferably PFA alone, a mixture of a TFE

homopolymer and PFA, or a mixture of a TFE homopolymer and FEP, and more preferably a mixture of a TFE homopolymer and FEP from the viewpoint that such a fluorine-containing polymer (a) allows the resulting cooking utensil to have excellent corrosion resistance and excellent adhesion between the primer layer and the fluororesin layer.

The heat resistant resin which may form the primer layer is typically a resin that is recognized as having heat resistance, and preferably a resin having a continuous use temperature of 150°C or higher. Note that the heat resistant resin is other than the above-described fluorine-containing polymer (a).

The heat resistant resin is not particularly limited, and is preferably at least one resin selected from the group consisting of polyamideimide resins, polyimide resins, polyethersulfone resins, polyetherimide resins, polyetheretherketone resins, aromatic polyester resins, and polyarylenesulfide resins.

The polyamideimide resin [PAI] is a resin comprising a polymer that has an amide bond and an imide bond in the molecule structure. The PAI is not particularly limited, and may be a resin comprising a high-molecular-weight polymer, such as those obtainable by reacting an aromatic diamine having an amide bond in the molecule with an aromatic tetrabasic carboxylic acid such as pyromellitic acid; those obtainable by reacting an aromatic tribasic carboxylic acid such as trimellitic anhydride with a diamine such as 4,4'-diaminodiphenyl ether or a diisocyanate such as diphenylmethane diisocyanate; and those obtainable by reacting an dibasic acid having an aromatic imide ring in the molecule with a diamine. It is preferred that the PAI comprises a polymer having an aromatic ring in the main chain because such a polymer will provide excellent heat resistance.

The polyimide resin [PI] is a resin comprising a polymer that has an imide bond in the molecule structure. The PI is not particularly limited and may be, for example, a resin comprising a polymer obtainable by reacting an aromatic tetrabasic carboxylic acid anhydride such as pyromellitic acid anhydride. It is preferred that the PI comprises a polymer having an aromatic ring in the main chain because such a polymer will provide excellent heat resistance.

The polyethersulfone resin [PES] is a resin comprising a polymer that includes a repeating unit represented by the following formula.

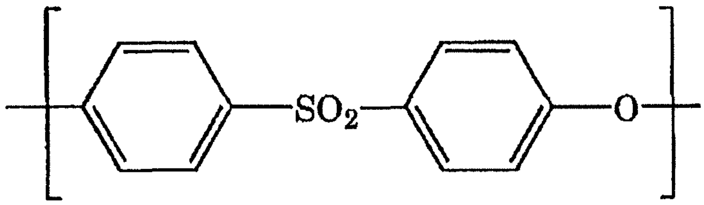

The PES is not particularly limited and may be, for example, a resin comprising a polymer obtainable by polycondensation of dichlorodiphenylsulfone and bisphenol.

It is preferred that the heat resistant resin is at least one resin selected from the group consisting of PAI, PI, and PES because these resins have excellent adhesion to the substrate and sufficient heat resistance at temperatures employed in firing for forming the cooking utensil, and will provide excellent corrosion resistance to the resulting cooking utensil. The PAI, the PI, and the PES each may comprise a single resin, or a combination of two or more species among each category.

The heat resistant resin is more preferably at least one selected from the group consisting of PAI and PI from the viewpoint of excellent adhesion to the substrate and heat resistance.

The heat resistant resin preferably comprises PES together with at least one resin selected from the group consisting of PAI and PI from the viewpoint of excellent corrosion resistance. That is, the heat resistant resin may be a mixture of PES and PAI, a mixture of PES and PI, and or a mixture of PES, PAI, and PI. The heat resistant resin is particularly preferably a mixture of PES and PAI.

If the heat resistant resin comprises PES together with at least one resin selected from the group consisting of PAI and PI, the proportion of the PES in the heat resistant resin is preferably 65 to 85% by mass based on the total amount of the PES and the at least one resin selected from the group consisting of PAI and PI. The proportion of the PES is more preferably 70 to 80% by mass.

The amount of the heat resistant resin is preferably 10 to 50% by mass, more preferably 10 to 40% by mass, and still more preferably 15 to 30% by mass based on the total amount of solids in the heat resistant resin and in the fluorine-containing polymer (a). The term "solid" herein means a component that is present in a solid form at 20°C. The term "total amount of solids in the heat resistant resin and in the fluorine-containing polymer (a)" herein means the total mass of the heat resistant resin and the fluorine-containing polymer (a) in a residue remained after applying a primer coating composition to a substrate, drying the applied composition at a temperature within the range from 80°C to 100°C, and firing the dried composition at a temperature within the range from 380°C to 400°C for 45 minutes.

The primer layer is typically formed on the substrate. The primer layer may be obtained by, for example, applying a primer coating composition that contains the fluorine-containing polymer (a) and the heat resistant resin, optionally

drying the composition, and then firing the composition. In the firing, the fluorine-containing polymer (a) migrates to the surface because there is a difference in surface tension between the fluorine-containing polymer (a) and the heat resistant resin. As a result, the fluorine-containing polymer (a) in the primer layer is located mainly on the surface side distant from the substrate, while the heat resistant resin is located mainly on the substrate side.

If the primer layer includes the fluorine-containing polymer (a) and the heat resistant resin, the primer layer has excellent adhesion to the substrate as the heat resistant resin adheres to the substrate. The primer layer also adheres well to the fluororesin layer because the fluorine-containing polymer (a) is compatible with perfluorinated fluororesins such as PTFE. Accordingly, when the primer layer includes the fluorine-containing polymer (a) and the heat resistant resin, the primer layer adheres well both to the substrate and to the fluororesin layer.

The primer layer preferably contains a polymer component and additives. The additives are not particularly limited, and examples thereof include leveling agents, solid lubricants, anti-settling agents, water absorbers, surface control agents, thixotropy imparting agents, viscosity control agents, anti-gelling agents, ultraviolet absorbers, light stabilizers, plasticizers, anti-flooding agents, anti-skinning agents, scratch inhibitors, fungicides, antibacterial agents, antioxidants, antistatic agents, silane coupling agents, chips of woods, quartzose sand, carbon black, clay, talc, diamond, fluorinated diamond, tourmaline, jade, germanium, extender pigments, corundum, quartz rock, boron nitride, boron carbide, silicon carbide, silicon nitride, alumina, silica powder, chrysoberyl, topaz, beryl, garnet, quartz, garnet, zirconium oxide, zirconium carbide, tantalum carbide, titanium carbide, tungsten carbide, mica, glittering flat pigments such as aluminum flakes, scaly pigments, glass, reinforcements, extenders, conductive fillers, and metal powder such as gold, silver, copper, and platinum powder.

The polymer component in the primer layer preferably consists of the fluorine-containing polymer (a) and the heat resistant resin. The phrase "the polymer component in the primer layer consists of the fluorine-containing polymer (a) and the heat resistant resin" herein means that the only polymers present in the primer layer are the fluorine-containing polymer (a) and the heat resistant resin. The primer layer in which the polymer component consists of the fluorine-containing polymer (a) and the heat resistant resin efficiently exhibits excellent adhesion both to the substrate and to the fluororesin layer.

For ensuring efficient excellent adhesion to both the substrate and the fluororesin layer, the polymer component in the primer layer preferably consists of the fluorine-containing polymer (a) and the heat resistant resin. However, for further improving the corrosion resistance of the cooking utensil, the polymer component may further include other resins in addition to the fluorine-containing polymer (a) and the heat resistant resin. Examples of other resins include phenol resins, urea resins, epoxy resins, urethane resins, melamine resins, polyester resins, polyether resins, acryl resins, acrylsilicone resins, silicone resins, and silicone polyester resins.

The primer layer preferably has a thickness of 5 to 30 $\mu$m. If the primer layer is too thin, pinholes may easily be formed, which may lead to reduced corrosion resistance of the cooking utensil. If the primer layer is too thick, cracks may be occurred easily, which may result in low corrosion resistance of the resulting cooking utensil. The upper limit of the thickness of the primer layer is more preferably 20 $\mu$m.

The substrate, the primer layer, and the fluororesin layer are preferably stacked in this order when they constitute the cooking utensil of the present invention.

If the substrate, the primer layer, and the fluororesin layer in the cooking utensil of the present invention are stacked in this order, letters or graphics may be printed on the top surface of the primer layer.

The cooking utensil of the present invention typically includes no other layer between the substrate and the primer layer, or between the primer layer and the fluororesin layer. For example, the cooking utensil may optionally have another or other layer(s) between the primer layer and the fluororesin layer.

In the cooking utensil of the present invention, the fluororesin layer preferably constitutes the outermost layer from the viewpoint of optimizing the color travel effect of the fluororesin layer. The cooking utensil, however, may further include other layers on the fluororesin layer as long as the layers do not impair the color travel effect of the fluororesin layer. For example, the cooking utensil of the present invention may include a clear layer to protect the fluororesin layer. The clear layer may contain any material as long as it is clear and does not impair the color travel effect of the fluororesin layer. Examples of the material include the fluororesins noted above as examples of the perfluorinated fluororesin which may be used to form the fluororesin layer. Among these, PTFE (a TFE homopolymer and/or a modified PTFE) is preferred. The clear layer preferably consists only of the above-described fluororesin.

The clear layer preferably has a thickness of 5 to 50 $\mu$m.

If the cooking utensil of the present invention includes the substrate, the primer layer, the fluororesin layer, and the clear layer, the cooking utensil can be produced by the following production method, for example.

That is, the cooking utensil of the present invention can be produced by a method including the steps of: (1) applying a primer coating composition (i) to a substrate to form a primer film; (2) applying a coating material (ii), which contains the perfluorinated fluororesin and the metal oxide-coated scaly pigment, to the surface of the primer film to form coated film (Ap); (3) applying a coating material (iii), which contains the fluororesin, to the surface of the coated film (Ap) to form coated film (Bp); and (4) firing the laminate of the primer film, the coated film (Ap), and the coated film

(Bp) to construct a cooking utensil which includes a substrate, a primer layer, a fluororesin layer, and a clear layer.

Step (1) is a step for applying a primer coating composition (i) to a substrate to form a primer film.

In Step (1), the primer coating composition (i) preferably contains the fluorine-containing polymer (a) and a heat resistant resin. The fluorine-containing polymer (a) and the heat resistant resin are as described above. The primer coating composition (i) may be in a liquid form or may be in a powder form. If the primer coating composition (i) is in a liquid form, the coating composition (i) contains the fluorine-containing polymer (a), the heat resistant resin, and a liquid medium. The liquid medium typically contains water and/or an organic liquid. The term "organic liquid" herein means an organic compound that is present in a liquid form at a normal temperature of around 20°C.

If the liquid medium of the primer coating composition (i) consists mainly of an organic liquid, the heat resistant resin and the fluorine-containing polymer (a) are dispersed as particles in the liquid medium and/or dissolved in the liquid medium. The organic liquid may be a conventionally known organic solvent. The organic liquid may be used singly, or two or more organic liquids may be used in combination.

If the liquid medium of the primer coating composition (i) consists mainly of water, the heat resistant resin is dispersed as particles in the liquid medium, and the fluorine-containing polymer (a) is dispersed as particles in the liquid medium.

If the liquid medium consists mainly of water, the primer coating composition (i) typically contains a surfactant for stabilization of particles of the fluorine-containing polymer (a) in dispersion. The surfactant may be a conventionally known one. In the primer coating composition (i), the surfactant may be used in combination with the organic liquid for stabilization of particles of the fluorine-containing polymer (a) in dispersion.

The primer coating composition (i) may be an organosol obtainable by, for example, the method disclosed in JP S49-17017 B.

The primer coating composition (i) is preferably present in a liquid form from the viewpoint of excellent adhesion to the substrate. More preferably, the liquid medium of the coating composition (i) consists mainly of water from the viewpoint of environmental concerns.

The primer coating composition (i) may further contain additives as described above in addition to the fluorine-containing polymer (a) and the heat resistant resin for improvement of workability on coating and corrosion resistance of the resulting cooking utensil.

The primer coating composition (i) may further contain the above-described other resins in addition to the fluorine-containing polymer (a) and the heat resistant resin from the viewpoint of improving corrosion resistance of the cooking utensil.

The primer coating composition (i) can be applied to the substrate by a non-limiting method. If the primer coating composition (i) is in a liquid form, the composition (i) can be applied by, for example, spray coating, roll coating, doctor blade coating, dip coating, impregnation coating, spin-flow coating, or curtain flow coating. Among these, spray coating is preferred. If the primer coating composition (i)is in a powder form, the composition (i) can be applied by electrostatic coating, fluidization dip coating, Roto lining, or the like method. Among these, electrostatic coating is preferred.

After the application of the primer coating composition (i) in Step (1) but before Step (2), firing may or may not be performed. If the primer coating composition (i) is in a liquid form, drying may or may not be performed after the application.

In Step (1), the drying is preferably performed at a temperature within the range from 70°C to 300°C for 5 to 60 minutes. The firing is preferably performed at a temperature within the range from 260°C to 410°C for 10 to 30 minutes.

If the primer coating composition (i) is in a liquid form, the drying is preferably performed after applying the composition (i) to the substrate in Step (1) and the firing is preferably omitted because firing of the laminate of the coatings is performed in Step (4) described below.

If the primer coating composition (i) is in a powder form, the firing is preferably performed after the application of the composition (i) to the substrate in Step (1).

The primer film is formed by applying the primer coating composition (i) to a substrate and optionally drying or firing the composition thus applied. The primer film will serve as the primer layer in the resulting cooking utensil.

Step (2) is a step for applying a coating material (ii), which contains the perfluorinated fluororesin and the metal oxide-coated scaly pigment, to the surface of the primer film to form coated film (Ap).

The coating material (ii) in Step (2) may be a powder coating material or a liquid coating material (e.g., an aqueous coating material) each containing particles of the perfluorinated fluororesin and the metal oxide-coated scaly pigment. A liquid coating material is preferred in order to uniformly apply the coating material to the object and form coated film having a smooth surface. On the contrary, a powder coating material is preferred in order to eliminate the need for the drying step and to easily form thick coated film by minimum cycles of application. If the coating material (ii) is a liquid coating material, the coating material (ii) is preferably dispersion of particles of the perfluorinated fluororesin and the metal oxide-coated scaly pigment in a liquid medium. More preferably, the liquid coating material is an aqueous coating material which is a dispersion of particles of the perfluorinated fluororesin and the metal oxide-coated scaly pigment in an aqueous medium that consists mainly of water.

If the coating material (ii) is a liquid coating material, the particles of the perfluorinated fluororesin in the coating material (ii) preferably have an average particle size of 0.01 to 40 $\mu$m. If the coating material (ii) is a powder coating material, the average particle size is preferably 1.0 to 50 $\mu$m.

The coating material (ii) can be applied to the surface of the primer film by a non-limiting method. Examples of the method include the methods as described above with regard to the application of the primer coating composition (i). If the coating material (ii) is a powder coating material, electrostatic coating is preferred.

In Step (2), drying or firing may be optionally performed after applying the coating material (ii) to the substrate. Preferably, the drying and the firing in Step (2) are performed under a similar conditions to in Step (1).

Generally, the firing after applying the coating material (ii) to the primer film is preferably omitted because all the coatings will be simultaneously fired in the firing of the laminate of the coatings in Step (4).

The coated film (Ap) is formed by applying the coating material (ii) to the surface of the primer film and optionally drying or firing the material (ii) thus applied. The coated film (Ap) will serve as the fluororesin layer in the resulting cooking utensil.

If two or more of fluororesin layers are formed, Step (2) may be repeated changing the composition of the coating material (ii) as necessary.

Step (3) is a step for applying a coating material (iii), which contains a fluororesin to the coated film (Ap), to form coated film (Bp).

The coating material (iii) in Step (3) may be a powder coating material or a liquid coating material (e.g., an aqueous coating material) each containing particles of the fluororesin. A liquid coating material is preferred in order to uniformly apply the coating material to the object and form coated film having a smooth surface. On the contrary, a powder coating material is preferred in order to eliminate the need for the drying step and easily form thick coated film by minimum cycles of application. If the coating material (iii) is a liquid coating material, the coating material (iii) is preferably dispersion of particles of the fluororesin in a liquid medium. More preferably, the coating material is an aqueous coating solution which is dispersion of particles of the fluororesin in an aqueous medium that consists mainly of water.

If the coating material (iii) is a liquid coating material, the particles of the fluororesin in the coating material (iii) preferably have an average particle size of 0.01 to 40 $\mu$m. If the coating material (iii) is a powder coating material, the average particle size is preferably 1.0 to 50 $\mu$m.

The coating material (iii) can be applied to the coated film (Ap) by a non-limiting method. Examples of the method include the methods described above with regard to the application of the primer coating composition (i). If the coating material (iii) is a powder coating material, electrostatic coating is preferred.

The coated film (Bp) may be formed by applying the coating material (iii) and optionally drying or firing the applied material (iii). Preferably, the drying and firing in Step (3) are performed under similar conditions to in Step (1). The coated film (Bp) will serve as the clear layer in the resulting cooking utensil.

If the clear layer is not necessary, Step (3) can be omitted.

Step (4) is a step of firing the coating laminate of the primer film, the coated film (Ap), and the coated film (Bp) to form a cooking utensil including a substrate, a primer layer, a layer (A), and a layer (B).

Preferably, the firing in Step (4) is performed under a similar conditions as in the firing in Steps (1) to (3).

The production method may include a step of printing letters, graphics, or the like after Step (1) for forming the primer film or after Step (2) for forming the coated film (Ap).

The way of such printing is not particularly limited. Examples of methods for such printing include pad-transfer printing. The ink which may be used for the printing is not particularly limited. Examples of the ink include compositions containing PES, a TFE homopolymer, and titanium oxide.

The cooking utensil of the present invention can be used in applications that utilize properties of the fluororesin such as anti-stick properties, heat resistance, and sliding properties. It will be suitably used as cooking utensils, such as frying pans, pressure pans, pans, grill pans, rice pots, ovens, hot plates, bread pans, kitchen knives, gas ranges, bread-making machines, the inner surface of microwaves, hot water dispensers, electric kettles, "*Taiyaki*" (Japanese fish-shaped cake) makers, waffle makers, and sandwich toasters. The cooking utensil of the present invention will especially suitably be used as cooking utensils for cooking, such as frying pans, pressure pans, pans, grill pans, rice pots, ovens, hot plates, bread pans, gas ranges, bread-making machines, the inner surfaces of microwaves, "*Taiyaki*" makers, waffle makers, and sandwich toasters because the cooking utensil of the present invention can maintain sufficient color travel effect and excellent aesthetic qualities even after use under a high temperature environment such as on cooking. The cooking utensil of the present invention is more suitably used as frying pans and hot plates, which are used at higher temperatures and in which the color travel effect of the fluororesin layer is easy to be visually identified during use or storage. Among them, it will particularly suitably be used as frying pans.

In the cooking utensil, the fluororesin layer in the present invention is preferably formed on surfaces which can contact with cooking ingredients such as foods. For example, when the cooking utensil is a frying pan, the fluororesin layer is preferably formed at least on the inner surface. The fluororesin layer may be formed both on the inner and outer surfaces of the frying pan.

EXAMPLES

The present invention is described in more detail below based on, but not limited to, examples and comparative examples. The sign "%" and the term "part(s)" refer to "% by mass" and "part(s) by mass", respectively.

<Determination of aspect ratio>

The aspect ratio (average particle size/average thickness) was calculated from the average particle size and the average thickness measured with a scanning electron microscope (SEM). The average aspect ratio of 30 samples was employed.

<Determination of average particle size>

The average particle size was determined from a particle size distribution measured with a laser diffraction particle size distribution analyzer (from Nikkiso Co., Ltd. Microtrac MT3300II, medium: pure water, temperature: room temperature).

<Substrate>

An aluminum plate (A1050) of which surface was degreased with acetone was used.

<Formation of primer film>

A primer coating material was applied to a target surface of the substrate by air spraying with W-101 (available from ANEST IWATA Corporation, a small-sized spray gun) at an atomization pressure of 0.2 MPa so that the dried film had a thickness of 10 to 15 μm.

The primer coating material used was a fluororesin primer coating material (product name: POLYFLON PTFE EK-1909S21R, available from Daikin Industries, Ltd.). After the application, the applied coating material was dried with a hot air circulation dryer or an infrared dryer at 100°C × 15 minutes to form a primer film.

<Preparation of glittering coating composition>

(Preparation of clear base coating composition)

The clear base coating composition (hereinafter, also referred to as a clear base) used was a fluororesin-containing clear coating composition, which is available from Daikin Industries, Ltd. It was prepared by mixing the following components in the stated order.

| | |
|---|---|
| (A) PTFE aqueous dispersion (average particle size: 0.3 μm, solid content: 60%, containing, as a dispersion stabilizer, 6% of polyoxyethylenetridecyl ether (ethylene oxide: 8.5 mol) based on PTFE) | 78.7 parts |
| (B) Glycerin | 4.7 parts |
| (C) Depolymerizable acrylic resin particle emulsion (butyl acryalte resin, average particle size: 0.3 μm, solid content: 40%) | 11.8 parts |
| (D) Nonionic surfactant (polyoxyethylenetridecyl ether, Dispanol TOC (20% aqueous solution)) available from NOF corporation | 4.7 parts |
| (Other component) Thickener (a 25% aqueous solution of sodium laurylsulfate) | 1.9 parts |

(Method of preparing glittering fluororesin coating composition for middle coat and topcoat)

A glittering material (e.g., titanium dioxide-coated silica flake, Colorstream T10-03 available from Merck KGaA) was weighed, and then added to water. The mixture was mixed uniformly, and then added to the clear base coating composition. The resulting mixture was mixed and stirred with a 3-1 motor at 300 rpm for 20 minutes. A glittering fluororesin coating composition was thus produced.

<Formation of middle-coat film>

The glittering fluororesin coating composition for a middle coat was filtered with a wire mesh (150 mesh) and

then applied to the surface of the primer film by air spraying with W-101 (a small-sized spray gun, available from ANEST IWATA Corporation) at an atomization pressure of 0.2 MPa so that the coating after firing had a thickness of 5 to 30 μm. After the application, the applied composition was dried with a hot air circulation dryer or an infrared dryer at 100°C × 15 minutes, to give dried film. If the topcoat layer is formed, the middle-coat layer is not essential and can be omitted.

<Formation of topcoat film>

The glittering fluororesin coating composition for a topcoat was filtered with a wire mesh (150 mesh) and then applied to the surface of the primer film or the middle coat by air spraying with W-101 (a small-sized spray gun, available from ANEST IWATA Corporation) at an atomization pressure of 0.2 MPa so that the coating after firing had a thickness of 5 to 30 μm. After the application, the applied composition was dried with a hot air circulation dryer or an infrared dryer at 100°C × 15 minutes, to give a dried film.

<Preparation of clear coating composition>

The clear coating composition described in the present Examples is a coating composition that provides a clear film free of glittering materials and pigments. The clear coating composition is the same as the above-mentioned clear base coating composition.

<Formation of clear film>

The clear coating composition was applied to the surface of the middle-coat film or the topcoat film, and dried in a similar manner to in the formation of the middle-coat film or the topcoat film. The applied film was dried, to thereby give a clear film.

<Preparation of evaluation laminate>

The laminate of the dried films obtained above was fired in a firing furnace at 380°C for 20 minutes, to produce an evaluation laminate.

Examples 1 to 12 and Comparative Examples 1 to 4

The evaluation laminates having a layered structure, which are listed in Table 1, were prepared in the manner described above. The amounts of the fluororesin and the pigment in the coating composition used in the examples and the comparative examples were as described below. The amounts of the components are expressed in terms of the solids content (parts by weight) based on 100 parts by weight of the solids content in the coating composition (residue remained after applying the coating composition and then firing the applied composition at 380°C).

(Glittering fluororesin coating composition for topcoat layer of Example 1 and Example 9 and middle-coat layer of Example 7)

| | |
|---|---|
| Fluororesin in the clear base | 93.0 |
| Colorstream T10-03 | 7.0 |

(Glittering fluororesin coating composition for topcoat layer of Example 2 and Example 10 and middle-coat layer of Example 8)

| | |
|---|---|
| Fluororesin in the clear base | 93.0 |
| Colorstream T10-03 | 3.5 |
| Iriodin 103 | 3.5 |

(Glittering fluororesin coating composition for topcoat layer of Example 3 and Example 11 and middle-coat layer of Example 9)

| | |
|---|---|
| Fluororesin in the clear base | 93.0 |
| Colorstream F10-00 | 7.0 |

(Glittering fluororesin coating composition for topcoat layer of Example 5)

| | |
|---|---|
| Fluororesin in the clear base | 93.0 |
| Colorstream T10-05 | 7.0 |

(Glittering fluororesin coating composition for topcoat layer of Example 6)

| | |
|---|---|
| Fluororesin in the clear base | 93.0 |
| Colorstream T10-05 | 3.5 |
| Iriodin 103 | 3.5 |

(Glittering fluororesin coating composition for middle-coat layer of Example 10 and topcoat layer of Example 4 and Example 12)

| | |
|---|---|
| Fluororesin in the clear base | 93.0 |
| Colorstream F10-00 | 3.5 |
| Iriodin 103 | 3.5 |

(Glittering fluororesin coating composition for middle-coat layer of Example 11 and Comparative Example 3 and topcoat layer of Comparative Example 1)

| | |
|---|---|
| Fluororesin in the clear base | 93.0 |
| Iriodin 103 | 7.0 |

(Glittering fluororesin coating composition for middle-coat layer of Example 12 and Comparative Example 4 and topcoat layer of Comparative Example 2)

| | |
|---|---|
| Fluororesin in the clear base | 93.0 |
| Iriodin 303 | 7.0 |

For the evaluation laminates obtained in the examples and the comparative examples, the degree of change in color hue (color travel effect) of the film by changing the angle of view was visually observed. The aesthetic qualities were evaluated according to the following manner. The results are shown in Table 1.

(Evaluation)

The aesthetic qualities were visually evaluated based on the following criteria.

3: The degree of change in color hue as the change of the angle of view was large
2: The degree of change in color hue as the change of the angle of view was medium
1: Almost no change was observed even if the angle of view is changed.

[Table 1]

| | | Structure | Primer layer | Middle-coat layer: Glittering fluororesin coating composition for middle coat | | | | Topcoat layer: Glittering fluororesin coating composition for topcoat | | | | Clear layer | Evacuation |
|---|---|---|---|---|---|---|---|---|---|---|---|---|---|
| | | | | Metal oxide-coated scaly pigment | | Other pigments | | Metal oxide-coated scaly pigment | | Other pigments | | | Aesthetic qualities |
| | | | | Type | Amount | Type | Amount | Type | Amount | Type | Amount | | |
| Examples | 1 | Two-layered coat | present | - | - | - | - | SF1 | 7 | - | - | - | 3 |
| | 2 | | present | - | - | - | - | SF1 | 3.5 | M1 | 3.5 | - | 2 |
| | 3 | | present | - | - | - | - | SF2 | 7 | - | - | - | 3 |
| | 4 | | present | - | - | - | - | SF2 | 3.5 | M1 | 3.5 | - | 2 |
| | 5 | | present | - | - | - | - | SF3 | 7 | - | - | - | 3 |
| | 6 | | present | - | - | - | - | SF3 | 3.5 | M1 | 3.5 | - | 2 |
| | 7 | Three-layered coat | present | SF1 | 7 | - | - | - | - | - | - | present | 3 |
| | 8 | | present | SF1 | 3.5 | M1 | 3.5 | - | - | - | - | present | 2 |
| | 9 | | present | SF2 | 7 | - | - | SF1 | 7 | - | - | - | 3 |
| | 10 | | present | SF2 | 3.5 | M1 | 3.5 | SF1 | 3.5 | M1 | 3.5 | - | 2 |
| | 11 | | present | - | - | M1 | 7 | SF2 | 7 | - | - | - | 3 |
| | 12 | | present | - | - | M2 | 7 | SF2 | 3.5 | M1 | 3.5 | - | 2 |
| Comparative Examples | 1 | Two-layered coat | present | - | - | - | - | - | - | M1 | 7 | - | 1 |
| | 2 | | present | - | - | - | - | - | - | M2 | 7 | - | 1 |
| | 3 | Three-layered coat | present | - | - | M1 | 7 | - | - | - | - | present | 1 |
| | 4 | | present | - | - | M2 | 7 | - | - | - | - | present | 1 |

In Table 1, the amounts of the components in the glittering fluororesin coating composition are expressed in terms of the solids content (parts by weight) based on 100 parts by weight of the solids content in the coating composition.
The abbreviated expressions in Table 1 refer to the following compounds.

SF1: Colorstream T10-03 (titanium dioxide-coated silica flake, aspect ratio: 58, average particle size: about 18 μm, available from Merck KGaA)
SF2: Colorstream F10-00 (iron sesquioxide -coated silica flake, aspect ratio: 52, average particle size: about 18 μm, available from Merck KGaA)
SF3: Colorstream T10-05 (titanium dioxide/silicon dioxide-coated mica ($TiO_2$: 34.0%, $SiO_2$: 33.0%), aspect ratio: 54, average particle size: about 24 μm, available from Merck KGaA)
M1: Iriodin 103 (titanium dioxide-coated mica, aspect ratio: 37, average particle size: about 22 μm, available from Merck KGaA)
M2: Iriodin 303 (diiron trioxide-coated mica, aspect ratio: 39, average particle size: about 19 μm, available from Merck KGaA)

Examples 13 and 14

A laminate of a substrate, a primer layer, and a topcoat layer was produced in a similar manner to in Example 1 except that the amounts (parts by weight) of the fluororesin and pigment in the glittering fluororesin coating composition used for the topcoat layer were changed as follows.

(Example 13)

| | |
|---|---|
| Fluororesin in the clear base | 100.0 |
| Colorstream T10-03 | 2.0 |

(Example 14)

| | |
|---|---|
| Fluororesin in the clear base | 100.0 |
| Colorstream T10-03 | 20.0 |

The laminate was tested on heat resistance in the following manner.

(Heat resistance test)

The laminate was placed in a hot air circulation dryer held at a furnace ambient temperature of 260°C and heated for 2 hours. The color difference between before and after the heating and gloss retention were determined. The results are shown in Table 2.
The measurements were performed with a gloss and color-difference meter (SM-7, available from Suga Test Instruments Co., Ltd.).
The color difference (ΔE) was calculated according to the following equation based on the color tone measured before and after the test.

$$\Delta E = (\Delta a^2 + \Delta b^2 + \Delta L^2)^{1/2}$$

(ΔE: difference in color, Δa: difference on red (+)/green (-) axis in the Lab color space, Δb: difference on yellow (+)/blue (-) axis in the Lab color space, ΔL: difference on white (+)/black (-) axis in the Lab color space)
The gloss retention (G) is expressed in the proportion of specular gloss after the test to that before the test and was calculated according to the following equation.

$$G = G1/G0 \times 100$$

(G: gloss retention (%), G0: gloss before the test, G1: gloss after the test)

[Table 2]

| | | Color difference (ΔE) | Gloss retention (G) |
|---|---|---|---|
| Examples | 13 | 0.94 | 101.3% |
| | 14 | 1.47 | 102.0% |

The results of Examples 1 to 12 in Table 1 reveals that the laminate containing the fluororesin layer in the present invention exhibits different color hues, a highlighted portion and a shaded portion, as change of the angle of view. In Comparative Examples 1 to 4, the desired aesthetic qualities were not achieved.

The results of measurements on the heat resistance of the coatings of Examples 13 and 14 based on changes in the color tone and the gloss revealed that both the color tone and the gloss showed only a small change. Further, almost no change was observed with eyes in both the color tone and the gloss, and thus the change in the coating appearance was within an acceptable range.

## Claims

**1.** A cooking utensil comprising:

(i) a substrate; and
(ii) a fluororesin layer containing

- a perfluorinated fluororesin, and
- a pigment which comprises scaly particles and is at least one selected from silica flakes coated with a metal oxide, glass flakes coated with a metal oxide, and mica coated with silicon oxide.

**2.** The cooking utensil of claim 1, wherein the metal oxide is selected from titanium oxide, iron oxide, tin oxide, and silicon oxide.

**3.** The cooking utensil of claim 1 or 2, wherein the perfluorinated fluororesin contains polytetrafluoroethylene.

**4.** The cooking utensil of any of claims 1-3, wherein the fluororesin layer further contains mica.

**5.** The cooking utensil of any of claims 1-4, which further includes a primer layer.

**6.** The cooking utensil of any of claims 1-5, which further includes a clear layer.

**7.** The cooking utensil of any of claims 1-6, which is a frying pan.

## Patentansprüche

**1.** Küchenutensil, umfassend

(i) ein Substrat; und
(ii) eine Fluorharzschicht, die folgendes enthält:

- ein perfluoriertes Fluorharz, und
- ein Pigment, das schuppenförmige Partikel umfasst, und mindestens eines ist, ausgewählt aus mit Metalloxid beschichteten Silikaplättchen, mit Metalloxid beschichteten Glasplättchen und mit Siliciumoxid beschichteter Glimmer.

2. Küchenutensil gemäß Anspruch 1, worin das Metalloxid aus Titanoxid, Eisenoxid, Zinnoxid und Siliciumoxid ausgewählt ist.

3. Küchenutensil gemäß Anspruch 1 oder 2, worin das perfluorierte Fluorharz Polytetrafluorethylen enthält.

4. Küchenutensil gemäß mindestens einem der Ansprüche 1-3, worin das Fluorharz ferner Glimmer enthält.

5. Küchenutensil gemäß mindestens einem der Ansprüche 1-4, das ferner eine Primerschicht enthält.

6. Küchenutensil gemäß mindestens einem der Ansprüche 1-5, das ferner eine klare Schicht enthält.

7. Küchenutensil gemäß mindestens einem der Ansprüche 1-6, das eine Bratpfanne ist.

## Revendications

1. Ustensile de cuisson comprenant :

   (i) un substrat; et
   (ii) une couche de fluororésine contenant

      - une fluororésine perfluorée, et
      - un pigment qui comprend des particules écailleuses et qui est au moins un élément choisi parmi des paillettes de silice revêtues d'un oxyde métallique, des paillettes de verre revêtues d'un oxyde métallique, et du mica revêtu d'oxyde de silicium.

2. Ustensile de cuisson selon la revendication 1, dans lequel l'oxyde métallique est choisi parmi l'oxyde de titane, l'oxyde de fer, l'oxyde d'étain et l'oxyde de silicium.

3. Ustensile de cuisson selon la revendication 1 ou 2, dans lequel la fluororésine perfluorée contient du polytétrafluoroéthylène.

4. Ustensile de cuisson selon l'une quelconque des revendications 1 à 3, dans lequel la couche de fluororésine contient en outre du mica.

5. Ustensile de cuisson selon l'une quelconque des revendications 1 à 4, qui inclut en outre une couche d'apprêt.

6. Ustensile de cuisson selon l'une quelconque des revendications 1 à 5, qui inclut en outre une couche transparente.

7. Ustensile de cuisson selon l'une quelconque des revendications 1 à 6, qui est une poêle à frire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 99021927 A
- WO 03011991 A
- JP S4917017 B


### Non-patent literature cited in the description


- *Journal of Applied Polymer Science,* 1973, vol. 17, 3253-3257